# FASCICULE DE BREVET EUROPEEN

(11) **EP 1 172 322 B1**
(45) Date de publication et mention de la délivrance du brevet: **27.10.2004**
(21) Numéro de dépôt: 01500182.9
(22) Date de dépôt: 13.07.2001
(51) Int. Cl.: B66C 13/14, H02G 11/02

(54) **Système d'actionnement pour enrouleurs de cable**
Antriebssystem für Kabeltrommeln
Actuation system for cable drums

(30) Priorité: 14.07.2000 ES 200001762
(43) Date de publication de la demande: 16.01.2002
(73) Titulaire: Zarraga Valpuesta, Miguel Manuel, 48100 Munguia (Vizcaya) (ES)
(72) Inventeur: Zarraga Valpuesta, Miguel Manuel, 48100 Munguia (Vizcaya) (ES)
(74) Mandataire: Urizar Barandiaran, Miguel Angel

(56) Documents cités:
- EP-A- 0 901 980
- EP-A- 1 093 207
- DE-A- 2 600 564
- DE-U- 29 612 360

## Description

La présente invention traite d'un système d'actionnement pour enrouleurs de câble, applicable, de préférence, à des enrouleurs de câbles d'alimentation de grues-portiques. Un système d'actionnement pour enrouleurs de câble comportant un moteur synchrone à aimants permanents muni d'un resolver, un réducteur ainsi qu'une armoire de manoeuvre est divulgué dans le document DE 246 12 360 U.

Depuis quelque temps, il y a eu un développement technologique important des grues pour conteneurs. Trois facteurs pourraient traduire cette évolution:
- Les grues-portiques pour conteneurs fonctionnent de plus en plus vite.
- Elles permettent une plus grande capacité de charge.
- Les courses de translation sont plus longues.

Ce qui a pour conséquence la nécessité d'améliorer technologiquement le système d'enroulement du câble d'alimentation pour les grues-portiques.

Les systèmes d'actionnement existants à l'heure actuelle ne satisfont pas les exigences exigées par les grues. Les principaux systèmes connus utilisent:
- moteur pair.
- embrayage à friction
- embrayage magnétique ou moteur asynchrone.

Tous ces systèmes impliquent trois inconvénients, à savoir:
- ils n'offrent pas les prestations exigées par les grues actuelles,
- leur installation et leur réglage sont très compliqués et spectaculaires,
- ils dépendent d'une grande quantité d'éléments, qui diminuent la fiabilité de l'ensemble enrouleur et de la grue.

Les améliorations qui seront apportées par le système d'actionnement objet de l'invention permettent d'offrir les prestations exigées par les grues actuelles pour conteneurs avec les avantages ajoutés suivants:
- petit nombre d'éléments passifs,
- le moteur occupe un moindre espace en fonctionnant avec la même puissance,
- économie importante d'énergie,
- il facilite le service après-vente, car ses éléments sont facilement remplaçables en cas de panne.

Pour comprendre la nécessité de cette invention, il faut bien tenir compte de l'importance de l'enrouleur de câble et évaluer à leur juste valeur les préjudices qu'un mauvais fonctionnement de celui-ci peut causer: si l'enrouleur /dérouleur de câble tombe en panne, la machine ne peut plus fonctionner.

L'objectif général de la présente invention est de développer un nouveau système d'actionnement pour les enrouleurs de câble d'alimentation des grues-portiques, qui comporte la mise au point d'un système électronique de réglage, ainsi que l'interface entre enrouleur/dérouleur et la grue.

Le produit résultant est tout à fait innovateur, garanti et testé, et il améliore ostensiblement les systèmes actuels. Il se caractérise par le fait qu'il se compose de:
a) au moins, un moteur synchrone à aimants permanents, muni d'un "resolver" qui, y étant intégré, fournit une information sur sa vitesse instantanée de rotation et/ou même sur sa position.
b) au moins un réducteur susceptible de fonctionner également comme multiplicateur associé au tambour qui enroule le câble, et qui est capable de supporter des charges importantes, aussi bien radiales qu'axiales, à de grandes vitesses;
c) au moins un capteur de tambour qui, grâce à des signaux aussi bien digitaux qu'analogiques, fournit une information sur le câble enroulé sur le tambour;
d) une armoire de manoeuvre qui, étant pourvue d'une alimentation extérieure, reçoit les différents éléments de contrôle, les récepteurs d'informations et/ou la/les sortie(s) d'alimentation, y compris un module de contrôle à logique programmable.

Des variantes de construction n'altèrent pas l'objet de l'invention et "personnalisent" le système en l'adaptant à différentes nécessités concrètes. Notamment et en option:
a) ledit capteur de tambour est logé dans une boîte de collecteur;
b) ledit tambour enrouleur/dérouleur peut être large ou monospirale;
c) le câble enroulé sur le tambour est associé à un guide de câble, avec un pendule pourvu de capteurs qui, au moyen de signaux aussi bien digitaux qu'analogiques, fournissent une information sur la tension instantanée supportée par le câble.

L'innovation apportée au système d'actionnement, au moyen du moteur synchrone et du réglage électronique, est totale. Jusqu'à présent, on ne connaît aucun fabricant qui ait appliqué cette technologie en ce qui concerne les machines électriques.

Les avantages du système d'actionnement à moteur synchrone et réglage électronique, suivant l'invention, face aux systèmes actuellement existants, sont les suivants:
- meilleures prestations pour les machines en vitesse et en course,
- par comparaison avec le moteur le moteur paire, le réglage est plus simple et plus fin, permettant au câble de ne pas subir de tractions excessives ou, au contraire, de demeurer lâche;
- l'installation et la mise en marche s'abstenant d'une grande quantité de signaux extérieurs sont plus simples;
- plus grande fiabilité et pièces pouvant être changées immédiatement, car il s'agit d'éléments commerciaux;
- économies d'énergie et d'espace, car il s'agit de moteurs synchrones.

Pour mieux comprendre l'objet de la présente invention, une forme préférentielle de réalisation pratique, susceptible de changements accessoires qui n'en dénaturent pas le fondement, est représentée sur les plans..

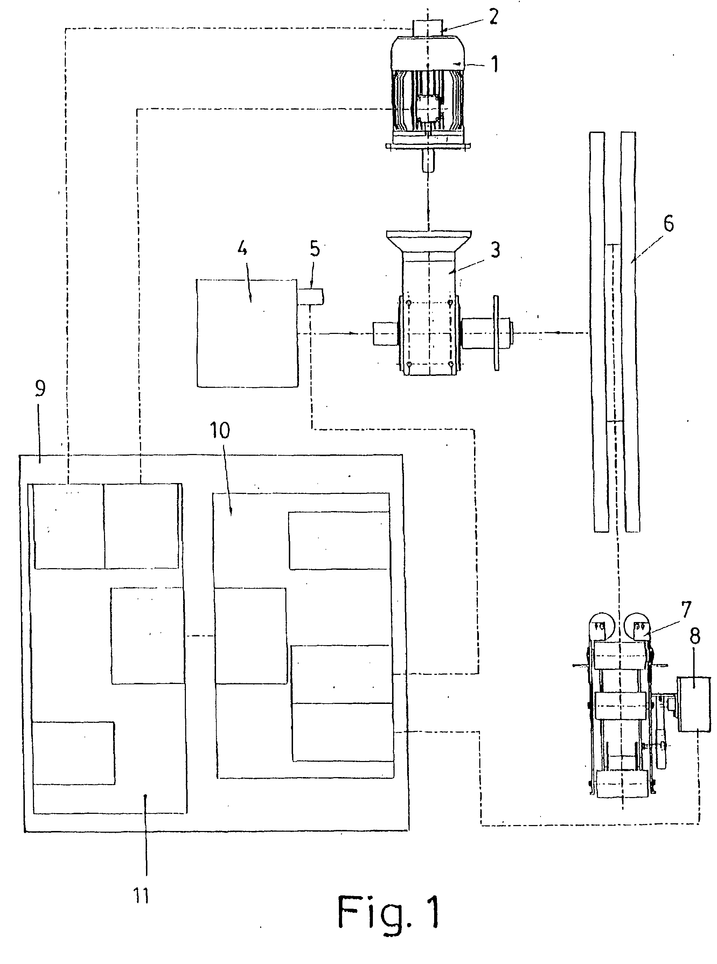

La figure 1 représente un schéma général du système d'actionnement pour enrouleurs/dérouleurs de câble suivant l'invention, pour un exemple de réalisation pratique (translation), avec tambour (6) monospirale et guide de câble (7) avec un pendule et un capteur du pendule (8).

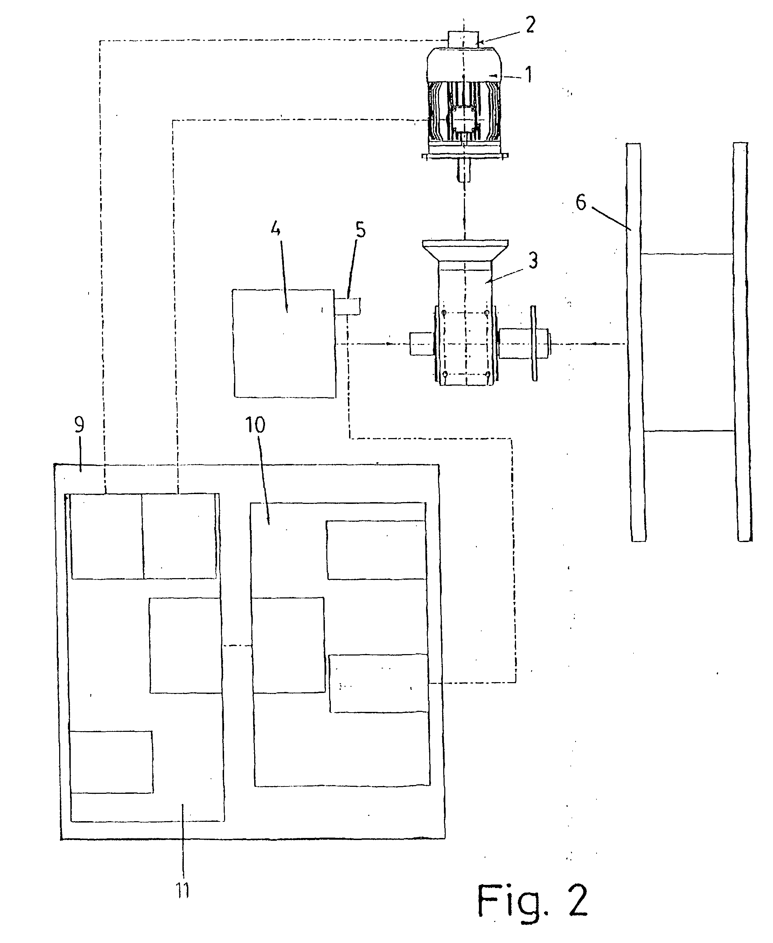

La figure 2 représente un schéma général du système d'actionnement pour enrouleurs de câble suivant l'invention, pour un exemple de réalisation pratique alternative (levage), avec tambour (6) large.

On décrit ci-dessous un exemple de réalisation pratique, non limitative, de la présente invention.

Un enrouleur de câble est un dispositif qui enroule et déroule un câble suivant les nécessités de la machine qu'il alimente (dans le cas d'un câble électrique) ou suivant les nécessités de l'application en question. Lorsqu'on parle de longues courses du câble, cet actionnement exige un moteur qui fasse tourner le tambour chargé d'enrouler le câble, car d'autres systèmes sont insuffisants.

Conformément à l'invention, et suivant la réalisation représentée dans le système, qui est constitué par les éléments décrits:
a) Le moteur synchrone (1) est à aimants permanents: c'est la grande nouveauté de l'invention, étant donné la grande vitesse d'accélération et la précision qu'il est capable d'offrir (jusqu'à trois plus qu'un moteur asynchrone standard). Sa courbe de couple/vitesse, presque horizontale et plane (point d'une valeur inestimable dans cette invention) et sa grande capacité de glissement sans surchauffes sont elles aussi déterminantes. Il peut obtenir une protection IP-65 et être appliqué dans une atmosphère explosive, et il est de petite taille.
b) Le resolver (2) fait partie du moteur (1) indiqué ci-dessus. Grâce à lui, le moteur (1) donne une information sur la vitesse à laquelle il est en train de tourner et même la position dans laquelle il se trouve. C'est la raison essentielle pour laquelle ce moteur (1) tourne si finement et si précisément.
c) Le réducteur (3) appliqué dans cette invention est capable de supporter des charges importantes, aussi bien radiales qu'axiales et à des vitesses élevées. La raison de ce choix est que ce réducteur (3) doit fonctionner comme multiplicateur. Grâce à une réduction appropriée et les grandes vitesses que peut atteindre le moteur (1) aidant, on peut choisir un moteur (1) de plus faible puissance qu'un autre moteur asynchrone équivalent. On tient compte des pertes du réducteur (3) au moment des calculs en vue de son choix.
d) Le capteur (5) du tambour (6) comporte différentes cames et des potentiomètres. Sa fonction est de donner une information au sujet du câble enroulé sur le tambour (6) au moyen de signaux, aussi bien digitaux qu'analogiques.
e) Le tambour (6) peut être monospirale (en cas de translation) ou large (en cas de levage) où s'enroule le câble.
f) Le coeur de l'actionnement se trouve dans l'armoire de manoeuvre (9). Tout le contrôle du système enrouleur s'effectue à partir de modules digitaux (10), (11), situés dans cette armoire (9).
g) Le module digital de logique programmable (10) est l'équipement qui synchronise et qui ordonne. Il peut s'agir d'un PLC ou d'une plaque électronique développpée/programmée par le demandeur lui-même, exclusivement en vue de l'actionnement des enrouleurs de câble, suivant l'invention. Il n'est pas décrit de façon plus détaillée, car le logiciel ne fait pas l'objet de l'invention. Avec le module digital (10) de logique programmable, on traite l'information des capteurs (2), (5), (8) et donne des ordres au module digital de contrôle du moteur;
h) Le module digital (11) de contrôle du moteur (1) reçoit les ordres que lui donne le module de logique programmable (10) et contrôle le moteur (1) conformément à ces ordres, en s'auto-corrigeant grâce au signal du resolver (2).

Les éléments optionnels qui s'emploient également dans le système objet de l'invention sont:
i) Un guide de câble (7) à pendule; on l'utilise habituellement dans des mouvements de translation. Sa fonction est de guider le câble de façon ordonnée. Il dispose d'un pendule mobile, à l'intérieur duquel se trouve le câble, et il est guidé.
j) Des capteurs (8) du pendule du guide (7), qui comportent différentes cames et des potentiomètres et dont la fonction est de donner une information sur la tension que supporte le câble, au moyen de signaux aussi bien digitaux qu'analogiques.
k) Une boîte de collecteur (4) où est logé le capteur (5) du tambour (6), en fonction des nécessités de chaque application concrète.

### Exemple pratique de réalisation.

L'application la plus complexe d'un enrouleur de câble est l'alimentation d'une grue de port, avec une course variable et le point d'alimentation au centre de la course (nous sommes en train de parler d'un mouvement de translation). Toutes les autres applications seront plus simples et donc comprises dans l'objet de l'invention.

Prenons, par exemple, un enrouleur pour une course de 1000 mètres: nous serions en train de parler d'un enrouleur qui doit enrouler et relâcher 500 mètres de câble. Un câble, qui peut peser environ 7 kilogrammes/mètre, ce qui fait que l'enrouleur supporterait un poids de 3500 kilogrammes, dans le cas où il serait plein. Nous avons recours à un tambour monospirale (6). Nous constatons que la vitesse pour enrouler et relâcher le câble n'est pas constante, mais dépend de la vitesse à laquelle va la grue et de la quantité de câble sur le tambour (6). De ce fait, un contrôle de la vitesse serait très complexe à faire et, en outre, peu fiable. La solution prise est celle de contrôler à chaque instant le couple du moteur (1) et de donner le couple nécessaire à chaque instant, en plus d'un contrôle secondaire de la vitesse.

Pour effectuer un contrôle du couple, il nous faut plusieurs données:
- La quantité de câble sur l'enrouleur (6) ou la situation de la grue: renseignement obtenu grâce à un capteur (5) placé sur le tambour (6).
- Si nous enroulons ou déroulons: renseignement obtenu grâce à une combinaison des commandes de la grue et du capteur (8) du pendule du guide.
- Signaux d'alarme: renseignement obtenu grâce aux capteurs mentionnés ci-dessus.
- Données supplémentaire permettant un réglage plus fin: vitesse de la grue, détection exacte du point d'alimentation ou mesure de la force de traction dans le câble.

La principale nouveauté de ce système repose, comme nous l'avons dit, sur le moteur (1) et sur son système de contrôle. Le moteur synchrone à aimants permanents n'a jamais été utilisé dans des enrouleurs de câble.

Dans cette application, la caractéristique à laquelle le fabricant attache le plus d'importance est la courbe de couple/vitesse. En tentant qu'elle soit la plus horizontale possible. Ces moteurs ont une courbe de couple/vitesse très horizontale pendant une marge de vitesse très large.

Le contrôle de ce moteur (1) se fait au moyen d'un module digital (11). Ce module digital (11) ne crée pas d'harmoniques, car le réglage ne se fait pas par variations de fréquence. Aussi, ces harmoniques -qui peuvent endommager plusieurs composants du système, tels que le moteur (1) et le réducteur (3), ne constituent plus un problème.

## Revendications

1. Système d'actionnement pour enrouleurs de câble, notamment de câbles d'alimentation pour machines électriques mobiles, **se caractérisant par le fait qu'**il comporte:
a) au moins un moteur synchrone (1) à aimants permanents muni d'un resolver (2) qui en fait partie et fournit une information sur sa vitesse instantanée de rotation et/ou même sur sa position;
b) au moins un réducteur (3) susceptible de fonctionner également comme multiplicateur associé au tambour (6) qui enroule le câble et qui est capable se supporter des charges importantes, aussi bien radiales qu'axiales, à des vitesses élevées;
c) au moins un capteur (5) de tambour qui, au moyen de signaux aussi bien digitaux qu'analogiques, fournit une information au sujet du câble enroulé sur le tambour (6);
d) une armoire de manoeuvre (9) qui, étant pourvue d'une alimentation extérieure, reçoit les différents éléments de contrôle, récepteurs d'informations et/ou sortie(s) d'alimentation, y compris un module de contrôle à logique programmable.

2. Système d'actionnement pour enrouleurs de câble, selon la revendication précédente, **se caractérisant par le fait que**, en option, le susmentionné capteur (5) de tambour est installé dans une boîte de collecteur (4).

3. Système d'actionnement pour enrouleurs de câble, selon les revendications précédentes, **se caractérisant par le fait que** le tambour enrouleur (6) mentionné est un tambour large.

4. Système d'actionnement pour enrouleurs de câble, selon les première et deuxième revendications, **se caractérisant par le fait que** le tambour enrouleur (6) mentionné est monospirale.

5. Système d'actionnement pour enrouleurs de câble, selon la quatrième revendication, **se caractérisant par le fait que** le câble enroulé sur le tambour est associé à un guide de câble, à pendule muni de capteurs (8) qui, moyennant des signaux, aussi bien digitaux qu'analogiques, fournissent une information sur la tension instantanée que supporte le câble.

## Patentansprüche

1. Antriebssystem für Kabelaufroller, dabei insbesondere für Speisekabel nicht ortsfester elektrischer Maschinen, **gekennzeichnet durch**:
a) mindestens einen Synchronmotor (1) aus Permanentmagneten, ausgestattet mit einem Resolver, (2) welcher als Bestandteil des Motors unmittelbare Information über die Drehgeschwindigkeit und/oder die jeweilige Position vermittelt;
b) mindestens einen Abwärtswandler (3), der ebenfalls als mit der das Kabel aufnehmenden Trommel (6) zusammengeschaltetes Untersetzungsgetriebe arbeitet und in der Lage ist bei hohen Geschwindigkeiten große Lasten sowohl radial als auch axial aufzunehmen;
c) mindestens einen an der Trommel sitzenden Sensor (5), der sowohl über digitale als auch analoge Signale Information zu dem auf der Trommel (6) aufgerollten Kabel vermittelt;
d) einen Steuerschrank (9) welcher von extern gespeist wird und in seinem Inneren über die unterschiedlichen Steuerelemente, Informationsempfänger und/oder einen bzw. mehrere Speiseausgänge sowie ein programmierbares logisches Steuermodul verfügt.

2. Antriebssystem für Kabelaufroller nach dem obigen Anspruch, **dadurch gekennzeichnet, daß** der oben genannte Trommelsensor (5) mit einem Sammelkasten (4) ausgestattet ist.

3. Antriebssystem für Kabelaufroller nach den obigen Ansprüchen, **dadurch gekennzeichnet, daß** die oben genannte Aufrolltrommel (6) aus einer breiten Ausführung besteht.

4. Antriebssystem für Kabelaufroller nach den obigen Ansprüchen eins und zwei, **dadurch gekennzeichnet, daß** die oben genannte Aufrolltrommel (6) von einspiraliger Ausführung ist.

5. Antriebssystem für Kabelaufroller nach dem obigen vierten Anspruch, **dadurch gekennzeichnet, daß** das auf der Trommel aufgerollte Kabel mit einer Kabelführung mit einem mit Sensoren (8) bestückten Pendel verbunden ist und diese Pendel mit Hilfe von sowohl analogen als auch digitalen Signalen Information über die aktuell auf das Kabel wirkende Spannung vermittelt.

## Claims

1. Drive system for cable winders, especially power supply cables for mobile electrical machines, characterised because it is comprised of:
a) at least one synchronous motor (1) with permanent magnets equipped with a resolver (2), which, forming part of the latter, provides information about its instantaneous rotation speed and/or even about its position;
b) at least one gear reducer (3) capable of working also as a multiplier, associated with the drum (6) which winds the cable and able to support great loads, either radical or axial, at great speeds;
c) at least one drum sensor (5), which, by means of digital and analogue signals, provides information about the cable wound on the drum (6);
d) a control box (9), which, equipped with external power supply, houses the different control elements, information receivers and/or power supply output(s), including a programmable logic control module.

2. Drive system for cable winders, according to previous claim, characterised because, as an option, the aforementioned drum sensor (5) is placed in a collector box (4).

3. Drive system for cable winders, according to previous claims, characterised because the aforementioned winder drum (6) is a wide drum.

4. Drive system for cable winders, according to claims one and two, characterised because the aforementioned winding drum (6) is mono-spiral.

5. Drive system for cable winders, according to claim four, characterised because the cable wound on the drum is attached to a cable guide, with a pendulum equipped with sensors (8), which, by means of both digital and analogue signals, provide information about the instantaneous tension that the cable supports.
